# EUROPÄISCHE PATENTSCHRIFT

(11) **EP 0 965 781 B1**
(45) Veröffentlichungstag und Bekanntmachung des Hinweises auf die Patenterteilung: **16.04.2003**
(21) Anmeldenummer: 99109345.1
(22) Anmeldetag: 31.05.1999
(51) Int. Cl.: F16L 3/24

(54) **Bügelklemme zum Befestigen empfindlicher Kabel**
Cable clamp for clamping fragile cables
Serre-câble pour attacher des câbles fragiles

(30) Priorität: 16.06.1998 IT MI981372
(43) Veröffentlichungstag der Anmeldung: 22.12.1999
(73) Patentinhaber: Firma Fi. Mo. Tec. S.r.l., 20128 Milano (IT)
(72) Erfinder: Feige, Giorgio, Milano 2, 20090 Segrate (MI) (IT)
(74) Vertreter: Weisse, Jürgen, Dipl.-Phys.

(56) Entgegenhaltungen:
- EP-A- 0 756 674
- WO-A-95/27164
- DE-A- 2 053 828
- DE-U- 1 664 774
- DE-U- 1 922 579

## Beschreibung

Die Erfindung bezieht sich auf eine Vorrichtung zum Befestigen von leitenden elektrischen Kabeln und Signalkabeln. Diese Vorrichtung ist ausgelegt, ein sicheres Anklemmen des Kabels zu erreichen, ohne auf dieses Kabel einen übermäßigen Druck auszuüben, was zu einer Beschädigung führen würde, sondern vielmehr das Kabel mit kontrolliertem Druck festzukemmen.

Bei der Radiofrequenz- (RF) und Hochfrequenz (HF)-Telephonie verwendet man für die Übertragung von Signalen und Daten über Kabel Koaxialkabel, optische Faserkabel und spezielle Wellenleiter. Diese Kabel haben eine sehr empfindliche Struktur bestehend aus einer äußeren, rohrförmigen Abschirmung aus Kupfer, die relativ dünn und sehr genau ist und die mit einem leichten Mantel aus Weichkunststoff (vorteilhafterweise PVC oder PE) verkleidet und durch diesen geschützt ist.

Die Verlegung dieser Kabel auf der Wand oder an Metallgerüsten bringt schwerwiegende Probleme mit sich, da die Kabel fest verbunden werden müssen, während jedoch gleichzeitig mögliche Verformungen dieser Kabel verhindert werden, die durch Druck verursacht sind, welcher auf dieselben in der Befestigungsvorrichtung ausgeübt wird.

Die üblichen Befestigungsverfahren, die bisher auf dem Installationssektor bekannt und verfügbar waren, haben sich für diesen Zweck als unzureichend erwiesen, weil nicht richtig das Problem einer Verriegelung dieser Kabel mit einem kontrollierten Druck gesehen wurde. Eine Bügelklemme zum Befestigen elektrischer Kabeln ist beispielsweise aus der WO 95/28582 bekannt.

Der Erfindung liegt die Aufgabe zu Grunde, eine Vorrichtung mit neuer Konzeption, genannt Bügelklemme, zu schaffen, die Lösungen vorschlägt zur Befestigung von Kabeln mit empfindlichen Strukturen.

Weil der reale äußere Durchmesser von nominell gleichen Kabel, gemessen an dem Kunststoffmantel, häufig relativ große konstruktive Toleranzen zeigt, kann man nicht eine Vorrichtung vorsehen, die eine Klemm-Schale oder einen Klemm-Kragen von geeignet bemessenem Durchmesser aufweist, welcher dem Durchmesser dieses Kabels entspricht.

Man muß daher auf Klemmelemente zurückgreifen, die eine besondere Geometrie und Konstruktion besitzen, welche sich bemüht, auf optimale Weise das Problem der Klemmung des Kabels mit kontrolliertem Druck zu lösen.

Erfindungsgemäß wird diese Aufgabe dadurch gelöst, daß in einem u-förmig gebogenen Bügel zwischen dessen Innenseiten geführt eine schubaufnehmende Platte gehaltert ist, die frei in dem Bügel gleitet und die den Schub der zentralen Klemmschraube auf zwei in den Bügel nur eingesetzte Schalen überträgt, die jede ein halbkreisförmiges Innenprofil zum Festklemmen eines Kabels aufweisen, und daß alle Teile zwischen den Schenkeln des Bügels geführt sind.

Ausgestaltungen der Erfindung sind Gegenstand der Unteransprüche.

Ein Ausführungsbeispiel der Erfindung ist nachstehend unter Bezugnahme auf die zugehörigen Zeichnungen näher erläutert.
- Fig.1: zeigt perspektivisch eine Vorrichtung zur Befestigung eines Kabels, die mittels einer neuartigen Bügelklemme, die aus einem ähnlichen, schon bekannten und gegenwärtig erhältlichen Modell abgeleitet ist, das in elektrischen Installationen in der Industrie viel verwendet wird und mit welchem die neuartige Befestigung einige Grundeigenschaften teilt.
Die Enden des Bügels dieser Bügelklemme können nach verschiedenen Varianten profiliert sein, um sich anzupassen an verschiedene Träger wie Winkel, Platten, Teller und C-Profile.
- Fig.2: ist eine auseinandergezogene, perspektivische Darstellung der Vorrichtung von Fig.1.
- Fig.3: ist eine perspektivische Darstellung und zeigt die Montage der schubaufnehmenden Platte auf dem u-förmig gebogenen Bügel der Bügelklemme.
- Fig.4: zeigt die Verformung der schubaufnehmenden Platte der Bügelklemme bei Auftreten einer Kraft an der Klemmschraube.
- Fig.5: zeigt die Verformung der schubaufnehmenden Platte der Bügelklemme bei Auftreten einer übermäßigen Kraft an der Klemmschraube.
- Fig.6: zeigt die Montage einer der Schalen in dem mit der schubaumehmenden Platte versehenen Bügel.
- Fig.7: ist eine Ansicht von rechts vorn in Fig.1 und veranschaulicht das Einrasten der Schale zwischen den Schenkeln des Bügels.
- Fig.8a: ist eine Ansicht der beiden Schalen von oben in Fig. 1 gesehen und zeigt die auf der Innenseite der im Querschnitt halbkreisförmigen Innenfläche vorgesehenen Zähne.
- Fig.8b: ist eine Ansicht einer der Schalen ähnlich Fig.8a.
- Fig.8c: ist eine perspektivische Darstellung der anderen Schale, in welcher die im Querschnitt halbkreisförmige Innenfläche mit den Zähnen zu sehen ist.
- Fig.9a: ist eine Draufsicht der Bügelklemme mit dem festzuklemmenden Kabel vor dem Festziehen der Klemmschraube.
- Fig.9b: ist eine Draufsicht der Bügelklemme ähnlich Fig.9a nach Festziehen der Klemmschraube, wobei die Zähne in den Mantel des Kabels eingreifen.
- Fig.10a: zeigt einen Längsschnitt der klemmschraubenseitigen Schale.
- Fig.10b: zeigt einen Längsschnitt der der Klemmschraube abgewandten Schale.

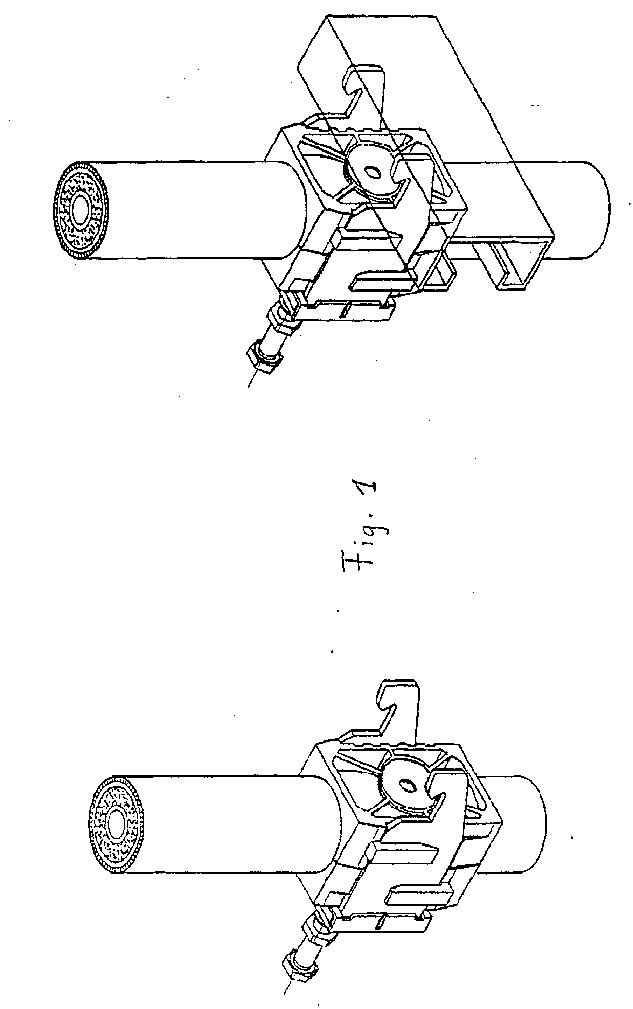

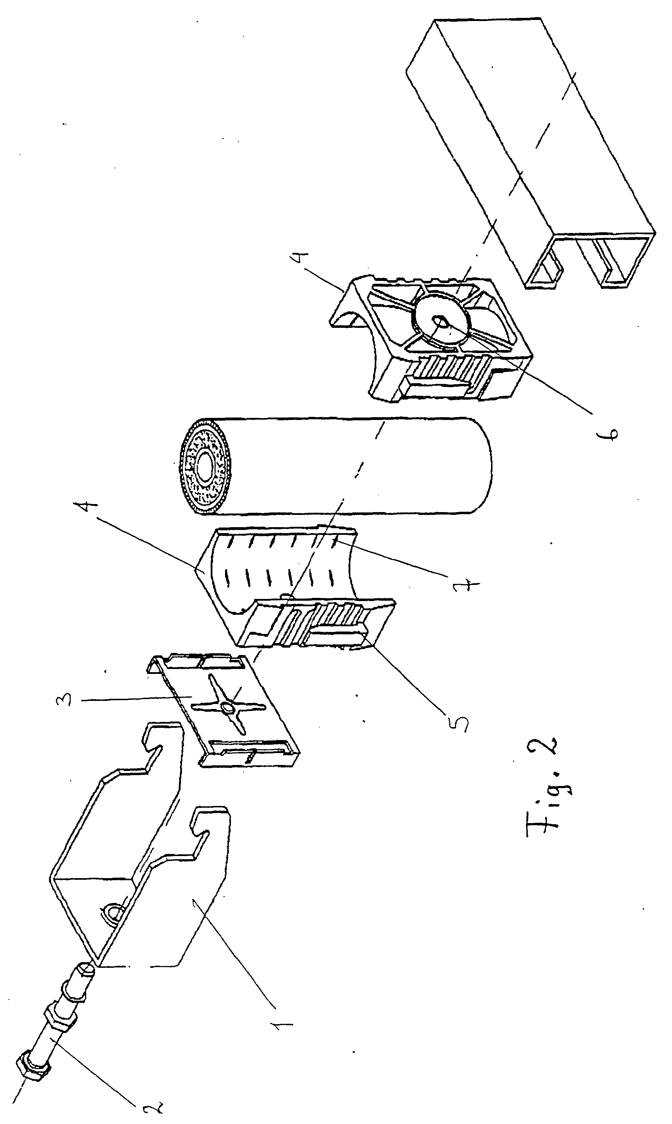

Die Konstruktion nach den Figuren 1 und 2 zeigt als Beispiel die neuartige Version zum Einhaken in ein C-Profil. Die schnelle Befestigung des zylindrischen Kabels erfolgt einfach durch Festziehen der einzigen Schraube 2. Fig.2 zeigt die Bügelklemme in einer Explosionsansicht.

Sichtbar sind die einzelnen wesentlichen Bauteile und auch einige wesentliche Einzelheiten.

In den u-förmig gebogenen Bügel 1 werden eine schubaufnehmende Platte 3 und nacheinander zwei spezielle Schalen 4 zum Festklemmen des Kabels eingeführt. Die schubaufnehmende Platte 3 und die Schalen 4 werden von der Klemmschraube 2 gedrückt und gleiten zwischen den beiden Schenkeln dieses Bügels 1, wobei sie mit ihren Seitenflächen geführt werden.

Die Schalen 4 werden unverlierbar gemacht und gleiten von einem geeigneten Klip 5 reibend gehalten.

Die Schalen 4 haben die neuartige Eigenschaft, entweder von vom oder seitlich in den Bügel 1 einschiebbar zu sein. Die Geometrie der Schalen 4 ist weiterhin speziell so gewählt, daß die Kabel mittels geeigneten Zähne 7, die in den Kunststoffmantel des Kabels einschneiden, festgeklemmt und gehalten werden, ohne ihn in weiterem Maße zusammenzudrücken. Weiterhin werden diese Schalen 4 aus Kunststoff vorzugsweise vor der Wirkung der Kraft der Klemmschraube 2 geschützt durch die schubaufnehmende Platte 3, welche die von dieser Klemmschraube 2 übertragene Last besser verteilt.

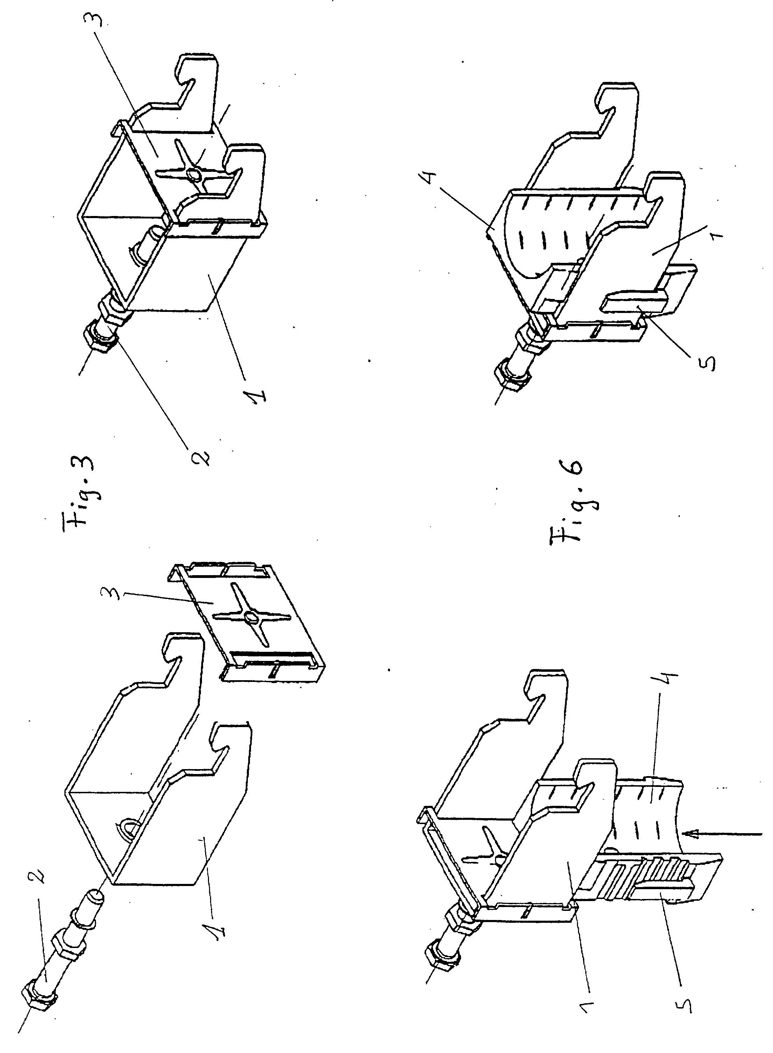

Weiterhin sind auf der Oberfläche der Schalen 4 aus Kunststoff, die übereinstimmend ausgebildet sind und die paarweise einander entgegengerichtet eingeführt werden, vorzugsweise vertiefte Zonen 6 vorgesehen zum Kompensieren eventueller Verformungen, die stets herrühren von dem Schub der Klemmschraube 2 gegen die schubaufnehmende Platte 3. Fig.3 zeigt die Bügelklemme mit dem u-förmig gebogenen Bügel 1, die mit einer Klemmschraube 2 versehen ist, bei Einführung der einzigen schubaufnehmenden Platte 3, die frei über diesen Bügel 1 gleitet.

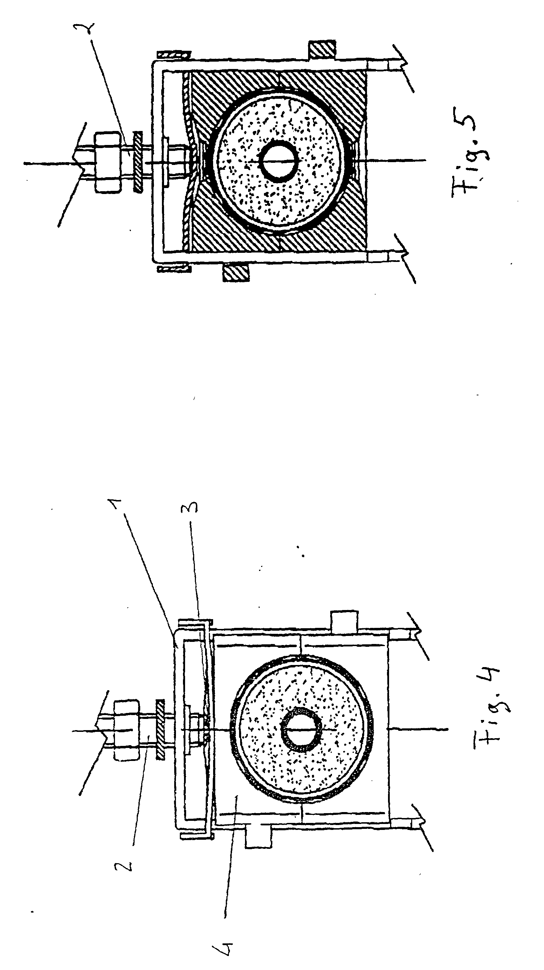

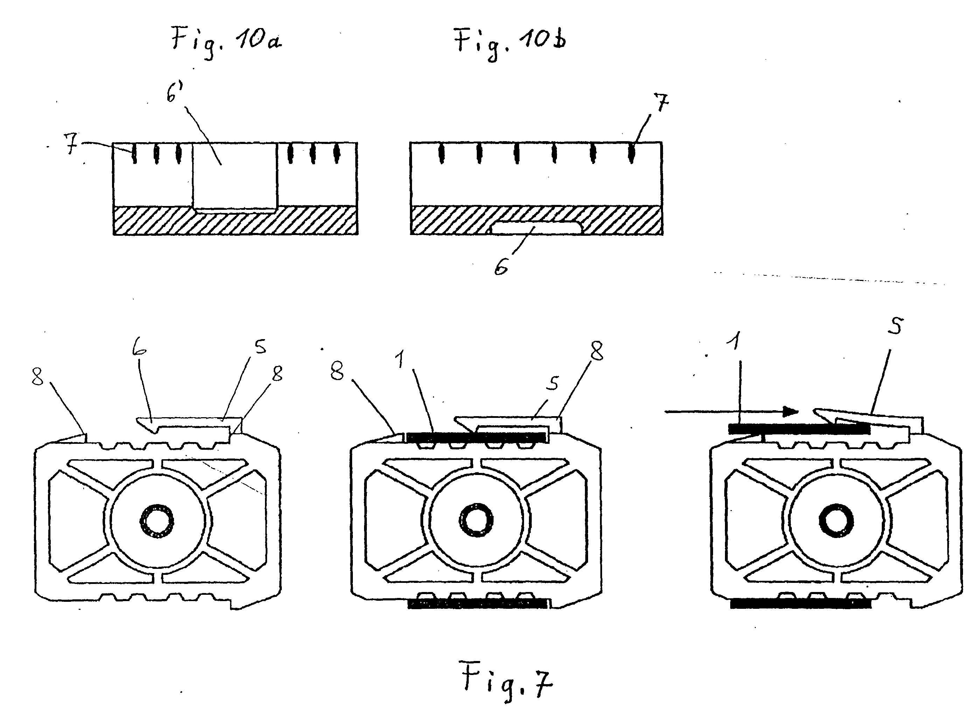

Die schubaufnehmende Platte 3 ist ein neuartiges Element. Dieses ist frei eingeführt und gleitet über den Bügel 1 und hat die Funktion, die kabelklemmenden Schalen 4 aus Kunststoff zu schützen, welche nacheinander eingeführt werden. Die Last der Klemmschraube 2 wird auch dank der großen Oberfläche der Stütze der schubaufnehmenden Platte 3 besser auf dieses Schalen 4 verteilt. Die schubaufnehmende Platte 3 hat weiterhin die wichtige Funktion, die von der Verschraubung aufgebrachte Kraft sichtbar zu machen. In der Tat bewirkt man, wenn man die Schraubkraft zu sehr erhöht, eine progressive Verformung der schubaufnehmenden Platte 3. Das stellt ein Signal für den Benutzer dar, welches sichtbar anzeigt, daß er im Begriff ist, das Kabel durch übermäßigen Druck zu beschädigen, wie in den Figuren 4 und 5 dargestellt ist.

Die Empfehlungen und Vorschriften für die von den Schrauben aufzunehmenden Torsionsbelastungen werden in der Tat manchmal von den Installateuren nicht beachtet, sei es, weil sie nicht verfügbar sind, oder nicht die geeigneten Geräte und Ausrüstungen verwendet werden, sei es, weil der Benutzer nicht genügend Sensibilität und Vertrautheit mit dem empfohlenen Installationsverfahren hat.

Wie in Fig.6 dargestellt ist, werden die kalibrierten Schalen 4 aus Kunststoff nacheinander in den Bügel 1 eingesetzt und sind bestimmt, das Kabel festzuklemmen. Insbesondere in Fig.6 sieht man, wie die Schale 4 seitlich in den Bügel 1 eingesetzt wird.

Die Form und die mechanischen Eigenschaften der Schale 4 gestatten jedenfalls das Einsetzen in den Bügel 1, entweder von vorn oder von der Seite, alles zum Vorteil der Bequemlichkeit der Handhabung dieser Schalen 4 in der Phase der Montage, die oft beschwerlich ist für den Benutzer, der unter ungünstigen klimatischen Bedingungen oder mit unsicherem Gleichgewicht arbeiten muß.

Die Erfindung schlägt daher Lösungen vor, die zu einer Verbesserung auch hinsichtlich dieser Art von Problemen führt.

In Fig.7 sieht man vor allem, daß der Klip 5 der Schale 4 in einer solchen Weise angeordnet ist, daß, wenn er einmal über eine Flanke des Bügels 1 geschoben ist, die Funktion erfüllt, die Schale 4 jedenfalls an Ort und Stelle zu halten und ein reibendes Gleiten auf diesem Bügel 1 zu ermöglichen.

Man hat daher nicht mehr ein unbeabsichtigtes Herunterfallen der Schalen 4 durch Austreten aus dem Bügel 1.

Ein geeigneter Vorsprung 6, der unten an dem Klip 5 angebracht ist, dient als Bremse, indem er an der Flanke des Bügels 1 reibt.

Die Elastizität des Klips 5 gestattet die Einführung der Schalen 4 entweder von vorn oder von der Seite in den Bügel 1. Das Einschnappen in der richtigen Position durch die beiden Führungsränder 8 der Schale 4 wird erleichtert durch das nach außen hin keilförmige Profil, welches außen an den Flanken der Schalen 4 vorgesehen ist mit der Funktion eines Randes, der die Ausrichtung aller Schalen 4 und die Orientierung unter 90° zu dem Bügel 1 sicherstellt.

Die Schalen 4 bleiben reibend durch den dafür vorgesehenen Klip 5 gehalten, der die Funktion hat, das Heraustreten aus dem Bügel und damit das unbeabsichtigte Herabfallen der Schalen 4 zu verhindern.

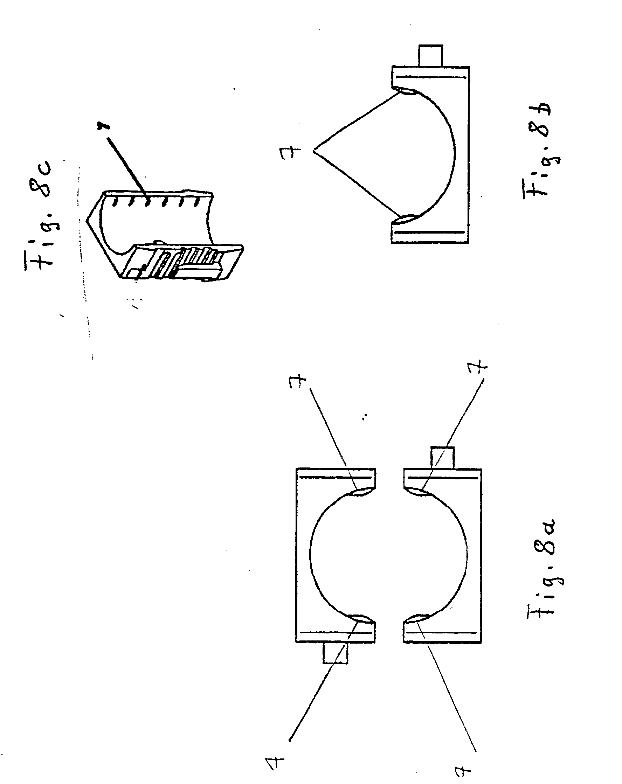

Die Figuren 8 a, b und c zeigen auf der Innenfläche der Schalen 4 wenigstens eine Reihe von Zähnen 7.

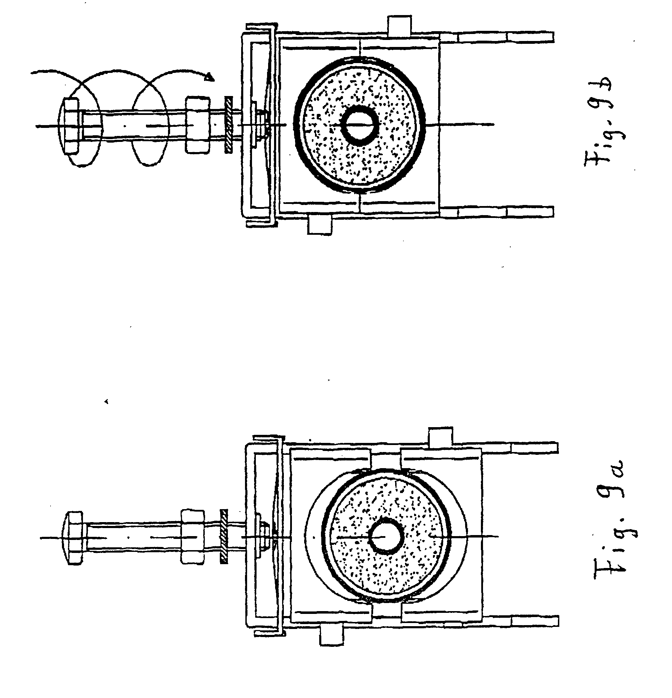

Nach der Erfindung haben die Durchmesser der Schale ein solches Maß, daß, wenn man zwei Schalen 4 aneinandergesetzt hat, wie in Fig.9a dargestellt ist, sich ein Durchmesser bildet, der geringfügig größer ist als der Nenndurchmesser der Kabel.

Die Reihe von Zähnen 7 auf der Innenseite der Schalen 4 bilden Vorsprünge, die in den äußeren Kunststoff-Schutzmantel des Kabels einschneiden, wenn die Schalen 4 auf dieses gepreßt werden, und infolgedessen dieses fest halten, wie in der Vorderansicht in den Figuren 9a und 9b dargestellt ist.

Der haltende Kontakt zwischen den Schalen 4 und dem Kabel erfolgt daher nicht auf der großen, halbzylindrischen Innenfläche der Schale 4 sondern über die Verzahnung auf dieser.

Mit dieser Ausführungsform werden wesentliche Vorteile gegenüber alten Vorschlägen von Bügelklemmen erreicht, wo die Halterung des Kabels nur durch Druck über Schalen mit einem glatten oder gewellten Innenprofil sichergestellt war und somit die Halterung des Kabels nur dank eines erhöhten radialen Drucks auf dieses Kabel sichergestellt wurde.

Gegenstand der Erfindung sind daher, wie in den Figuren 8a, b und c dargestellt ist, auch die verbesserten Schalen 4, bei denen das Innenprofil neu gestaltet und so gewählt ist, daß das Kabel kräftig ergriffen wird durch Reihen von dafür vorgesehenen Zähnen 7, wobei große Teile der radialen Kräfte gegen das Zentrum dieses Kabels vermieden werden, wie in den Figuren 9a, 9b dargestellt ist.

Die Zähne haben scharfe Kanten und sind von geeigneter Höhe, so daß sie in begrenztem und kontrolliertem Maße in den Mantel des Kabels eindringen können, und das geschieht, wenn man eine Schale 4 an die andere setzt und sie um das Kabel herum mittels der Schraube 2 des Bügels festklemmt.

Nachdem die Reihe von Zähnen 7 in der Nähe des Randes der Schale 4 angeordnet ist, erfolgt das Eindringen in den Kunststoffmantel des Kabels tangential zu diesem Kabel, wie in den Figuren 9a und 9b dargestellt ist.

Jeder Zahn hat ein v-förmiges Profil und ist senkrecht zur Achse des Kabels orientiert.

Das Eindringen in den weichen Mantel des Kabels ist somit erleichtert, und der auf dieses Kabel übertragene Druck wird stark begrenzt.

Natürlich ist die Höhe desZahnes von geringerem Maß gewählt als die Dicke des Kunststoffinantels des Kabels.

Um die durch Gefahr eventuellen übermäßigen Drucks, der von der Druckschraube 2 übertragen wird, und dementsprechend einer Verformung der Schale 4 aus Kunststoff möglichst zu vermindern, ist in der Mittelzone der Schale 4 und somit im Bereich der Kraft der Klemmschraube 2 eine Vertiefung 6 und 6'vorgesehen (Fig.10a und 10b).

Die Vertiefung kann entweder auf der Außenfläche der Schale 4 oder innen in dem konkaven Teil vorgesehen sein, wie in den Figuren 10a und 10b dargestellt ist.

Die Figur 10b zeigt die Vertiefung 6 auf der Außenseite der Schale 4, somit auf der Seite, die in direktem Kontakt mit der schubaufnehmenden Platte 3 ist.

Die Figur 10 a zeigt die Vertiefung 6' innen oder in dem konkaven Teil der Schale 4. Man versteht, daß sobald die schubaufnehmende Platte 3 einem übermäßigen Druck ausgesetzt ist, der von der Klemmschraube 2 übertragen wird, eine progressive Verformung dieser Platte einsetzt, wie in den Figuren 4 und 5 dargestellt ist. Die Figur 5 zeigt im Schnitt die Situation durch welche erkennbar ist, wie die schubaufnehmende Platte 3 freie Beweglichkeit in der Vertiefung der Schale 4 hat.

Das vermeidet einen zerstörenden Druck, der zu einer Verformung der Kunststoffschale 4 und daher einer Verformung des darunterliegenden Kabels führen würde.

## Patentansprüche

1. Bügelklemme zum Befestigen empfindlicher Kabel, **dadurch gekennzeichnet, daß** in einem u-förmig gebogenen Bügel (1) zwischen dessen Innenseiten geführt eine schubaufnehmende Platte (3) gehaltert ist, die frei in dem Bügel (1) gleitet und die den Schub der zentralen Klemmschraube (2) auf zwei in den Bügel (1) nur eingesetzte Schalen (4) überträgt, die jede ein halbkreisförmiges Innenprofil zum Festklemmen eines Kabels aufweisen, und daß alle Teile zwischen den Schenkeln des Bügels geführt sind.

2. Bügelklemme nach Anspruch 1, **dadurch gekennzeichnet, daß** die Schalen (4) mit halbkreisförmigem Innenprofil zum Einschließen des Kabels, wenn diese einmal im eingeführtem, gekoppeltem und in einem u-förmig gebogenen Bügel gegeneinander gesetzten Zustand sind, mit Reihen von Zähnen (7) versehen sind, die längs der Innenwand der konkaven Teile angeordnet sind, wobei diese Zähne fähig sind, tangential in den Kunststoffmantel des Kabels einzudringen.

3. Bügelklemme nach Anspruch 1 oder 2, **dadurch gekennzeichnet, daß** die Schalen (4) seitlich oder von vorn in den Bügel einführbar sind und durch einen Klip (5) unverlierbar gehalten bleiben.

4. Bügelklemme nach Anspruch 3, **dadurch gekennzeichnet, daß** die aus Kunststoff bestehenden Schalen (4) an einer Seite einen Klip (5) von einer solchen Länge aufweisen, daß dem Klip (5) eine Elastizität erteilt und eine seitliche Einführung ermöglicht wird, und daß der in Kontakt mit dem Bügel (1) befindliche Teil des Klips (5) vorzugsweise vorspringend ist, so daß er an den Flanken dieses Bügels reibt.

5. Bügelklemme nach Anspruch 4, **dadurch gekennzeichnet, daß** die aus Kunststoff bestehenden Schalen (4) in ihrem Mittelbereich eine Vertiefung (6,6') aufweisen, die alternativ entweder außen oder innen an der Schale vorgesehen ist, mit der Funktion eventuelle Deformationen zu absorbieren, die durch einen übermäßigen Schub der Klemmschraube (2) auf die schubaufnehmende Platte (3) verursacht sind.

6. Bügelklemme nach Anspruch 5, **dadurch gekennzeichnet, daß** das gegenüberstehende Zusammenfügen der beiden Schalen (4) mit dem konkaven Teil ein tangentiales Eindringen der Zähne in den Weichkunststoffmantel des Kabels bewirkt, wobei solche Zähne (7) innen längs der Wandung des konkaven Teils der Schale (4) vorgesehen sind und diese Zähne (7) ein v-förmiges Profil haben und senkrecht zur Achse des zu befestigenden Kabels orientiert sind.

7. Bügelklemme nach Anspruch 6, **dadurch gekennzeichnet, daß** die Schalen (4) außen über parallele Führungen (8) verfügen, welche die Schalen (4) in dem Bügel (1) gut ausgerichtet halten, und daß diese Führungen außen Abschrägungen aufweisen, welche das seitliche Einführen in den Bügel erleichtern.

8. Bügelklemme nach Anspruch 6, **dadurch gekennzeichnet, daß** die schubaufnehmende Platte (3) ein Anzeigeelement für die Ausübung eines eventuellen übermäßigen Drucks darstellt, der von der Klemmschraube (2) übertragen wird, wobei dieser übermäßige Druck durch die Verformung erkennbar wird, der diese schubaufnehmende Platte bei einer Erhöhung des Schubes der Klemmschraube unterworfen wird.

## Claims

1. Bow clamp for fixing sensitive cables, **characterised in that** a thrust-absorbing plate (3) is held in a u-shaped bow (1) guided between the inner sides thereof, the plate sliding freely in the bow (1) and transmitting the thrust of the central clamping screw (2) to two shells (4) only inserted into the bow (1), each of the shells having a semicircular inner profile for the clamping of a cable, and that all these parts are guided between the legs of the bow.

2. Bow clamp as claimed in claim 1, **characterised in that** the shells (4) with semicircular inner profiles for encompassing the cable when these are in their inserted, coupled and placed placed in opposition in a u-shaped bow are provided with rows of teeth (7), which are arranged along the inner wall of the concave parts, the teeth being adapted to penetrate into the plastics jacket of the cable.

3. Bow clamp as claimed in claim 1 or 2, **characterised in that** the shells (4) can be inserted from the side or from the front into the bow and remain held against loss by means of a clip (5).

4. Bow clamp as claimed in claim 3, **characterised in that** the shells (4) consisting of plastics, on one side, have a clip (5) of such a length that resiliency is imparted to the clip (5) and lateral insertion is permitted, and that the part of the clip (5) in contact with the bow (1) is preferably projecting to frictionally engage the legs of this bow.

5. Bow clamp as claimed in claim 4, **characterised in that** the shells (4) consisting of plastics have a recess (6,6') in their central portions, the recesses being provided, alternatvely, on the outside or on the inside of the shell with the function of absorbing possible deformations which have been caused by excessive thrust of the clamping screw (2) on the thrust-absorbing plate (3).

6. Bow clamp as claimed in claim 5, **characterised in that** the opposing assembly of the two shells (4) with their concave parts causes tangential penetration of the teeth into the soft plastics jacket of the cable, such teeth (7) being provided on the inside along the wall of the concave part of the shell and these teeth having v-shaped profile and being oriented normal to the axis of the cable to be fixed.

7. Bow clamp as claimed in claim 6, **characterised in that** the shells, on the outside, have parallel guides (8) which maintain the shells well aligned with the bow (1), and that these guides have chamfers on the outside, which facilitate the lateral insertion into the bow.

8. Bow clamp as claimed in claim 6, **characterised in that** the thrust-absorbing plate (3) represents an indicating element for indicating if excessive pressure is exerted which is transmitted by the clamping screw, this excessive pressure being recognised by the deformation to which this thrust-absorbing plate is subjected, when the thrust is increased.

## Revendications

1. Etrier de serrage destiné à fixer des câbles fragiles, **caractérisé en ce qu**'une plaque absorbant la poussée (3) est maintenue dans un étrier (1) incurvé en U entre les faces intérieures de celui-ci, plaque glissant librement dans l'étrier (1) et transmettant la poussée de la vis de serrage centrale (2) à deux capsules (4) seulement insérées dans l'étrier (1) et présentant chacune un profil intérieur demi-circulaire afin de serrer un câble, et que toutes les pièces sont guidées entre les branches de l'étrier.

2. Etrier de serrage selon la revendication 1, **caractérisé en ce que** les capsules (4) présentant un profil intérieur demi-circulaire sont pourvues de rangées de dents (7) disposées le long de la paroi intérieure des parties concaves pour renfermer le câble une fois qu'elles sont introduites dans un étrier incurvé en U et accouplées ensemble en s'opposant l'une à l'autre, ces dents étant capables de pénétrer tangentiellement dans la gaine de matière plastique du câble.

3. Etrier de serrage selon la revendication 1 ou 2, **caractérisé en ce que** les capsules (4) sont susceptibles d'être introduites dans l'étrier latéralement ou par devant et sont maintenues de façon imperdable par un clip de serrage (5).

4. Etrier de serrage selon la revendication 3, **caractérisé en ce que** les capsules (4) composées de matière plastique présentent sur un côté un clip de serrage (5) de longueur telle que le clip de serrage (5) dispose d'une élasticité et peut être introduit latéralement, et que la partie du clip de serrage (5) se trouvant en contact avec l'étrier (1) est de préférence saillante de sorte qu'elle frotte contre les flancs de cet étrier.

5. Etrier de serrage selon la revendication 4, **caractérisé en ce que** les capsules (4) composées de matière plastique présentent dans leur domaine médian une cavité (6,6') prévue en alternance soit à l'extérieur soit à l'intérieur de la capsule et ayant pour fonction d'absorber d'éventuelles déformations causées par une poussée excessive de la vis de serrage (2) sur la plaque absorbant la poussée (3).

6. Etrier de serrage selon la revendication 5, **caractérisé en ce que** la réunion face à face des deux capsules (4) avec la partie concave provoque une pénétration tangentielle des dents dans la gaine du câble composée de matière plastique molle, de telles dents (7) étant prévues à l'intérieur le long de la paroi de la partie concave de la capsule (4), et ces dents (7) présentant un profil en V et étant orientées verticalement par rapport à l'axe du câble devant être fixé.

7. Etrier de serrage selon la revendication 6, **caractérisé en ce que** les capsules (4) disposent à l'extérieur de guidages parallèles (8) maintenant les capsules (4) dans une bonne orientation à l'intérieur de l'étrier (1), et que ces guidages présentent à l'extérieur des surfaces biseautées facilitant l'introduction latérale dans l'étrier.

8. Etrier selon la revendication 6, **caractérisé en ce que** la plaque absorbant la poussée (3) représente un élément affichant une éventuelle pression excessive exercée qui est transmise par la vis de serrage (2), cette pression excessive étant susceptible d'être détectée par la déformation à laquelle est soumise cette plaque absorbant la poussée dans le cas d'une augmentation de la poussée de la vis de serrage.
